**Europäisches Patentamt**

**European Patent Office**

**Office européen des brevets**

(19)

(11) Veröffentlichungsnummer: **0 305 460**
**B1**

(12)                               **EUROPÄISCHE PATENTSCHRIFT**

(45) Veröffentlichungstag der Patentschrift: **05.09.90**

(51) Int. Cl.⁵: **B 29 B 9/06,** B 26 D 7/08

(21) Anmeldenummer: **88902398.2**

(22) Anmeldetag: **16.03.88**

(86) Internationale Anmeldenummer:
**PCT/DE88/00159**

(87) Internationale Veröffentlichungsnummer:
**WO 88/06959 22.09.88 Gazette 88/21**

(54) **STRANGGRANULATOR MIT WÄHREND DES BETRIEBS WECHSELBAREM GEGENMESSER.**

(30) Priorität: **16.03.87 DE 3708453**

(43) Veröffentlichungstag der Anmeldung:
**08.03.89 Patentblatt 89/10**

(45) Bekanntmachung des Hinweises auf die
Patenterteilung:
**05.09.90 Patentblatt 90/36**

(84) Benannte Vertragsstaaten:
**BE DE FR GB IT NL**

(56) Entgegenhaltungen:
**DE-A-3 620 015**
**FR-A-2 520 593**
**US-A-3 837 586**
**US-A-4 208 931**

(73) Patentinhaber: **REINHARD, Michael**
**Waldstrasse 9**
**D-6117 Schaafheim (DE)**

(72) Erfinder: **REINHARD, Michael**
**Waldstrasse 9**
**D-6117 Schaafheim (DE)**

(74) Vertreter: **Bardehle, Heinz, Dipl.-Ing. et al**
**Patent- und Rechtsanwälte Bardehle-**
**Pagenberg-Dost-Altenburg-Frohwitter-Geissler**
**& Partner Postfach 86 06 20**
**D-8000 München 86 (DE)**

Courier Press, Leamington Spa, England.

**Beschreibung**

Die Erfindung betrifft einen Stranggranulator, vornehmlich zum Granulieren von Kunststoffen, nach dem Oberbegriff des Anspruchs 1. Solch einen Stranggranulator ist beispielsweise aus der DE—A—2901018 bekannt.

Stranggranulatoren sind Maschinen, mit denen Stoffe bzw. Stofflüsse, im vorliegenden Fall Stränge, in kleine Teile getrennt werden. Bei der Herstellung von Kunststoff-Formmassen dienen sie üblicherweise dazu, den Kunststoff nach dem Synthetisieren und Compoundieren in eine Form zu überführen, in der er einfach zu portionieren und abzupacken ist und von möglichst allen gängigen Maschinen weiterverarbeitet werden kann.

Aus den DE—A—25 12 899, DE—A—26 46 309 und DE—A—28 09 680 sind Granulatoren bekannt, mit denen das Granulieren von Kunststoffen im sogenannten "Heißabschlag" durchgeführt wird. Dabei wird Kunststoffschmelze durch eine Lochscheibe in Wasser extrudiert. Die sich bildenden Stränge werden von an der Lochscheibe umlaufenden Messern abgetrennt. Diese Granulatoren finden vornehmlich beim Granulieren von Massenkunststoffen Anwendung und liefern die dazu notwendigen Durchsatzleistungen. Hochwertige Kunststoffe, sogenannte Engineering Plastics, die oft zur Fadenbildung neigen, können so nicht zufriedenstellend granuliert werden. Für solche Aufgaben sind aus den DE—A—27 24 464 und DE—A—29 01 018 Stranggranulatoren bekannt, die vorzugsweise bei etwas geringeren Durchsatzleistungen und gefüllten und verstärkten Kunststoffen eingesetzt werden. Die Schmelze wird durch Mehrlochdüsen in ein Wasserbad oder fließendes Wasser extrudiert und die sich durch Abkühlung bildenden Stränge werden nach Zurücklegen einer Kühlstrecke dem eigentlichen Stranggranulator zugeführt, in dem sie durch einen Schneidrotor mit mehreren Messern an einem feststehenden Gegenmesser abgeschnitten werden.

Es hat sich aber gezeigt, daß die gebräuchlichen Maschinenkonzepte der Stranggranulatoren einen gravierenden Nachteil aufweisen: Beim Granulatieren von gefüllten und verstärkten Kunststoffen kommt es zu einem starken Verschleiß der Schneidkanten. Dies gilt insbesondere dann, wenn die Füll- oder Verstärkungsstoffe sehr hart sind und zur abrasiven Beanspruchung eine korrosive Komponente hinzukommt. Bedingt dadurch, daß das Gegenmesser im Vergleich zu den Messern auf dem Schneidrotor bei jedem Schnitt im Eingriff ist, ist sein Verschleiß ganz besonders hoch. Schon nach wenigen Betriebsstunden kann die Schnittqualität und damit die Granulatform so schlecht werden, daß ein Austausch des verschlissenen Gegenmessers erforderlich wird. Kontinuierliche oder sich über längere Zeiträume erstreckende Prozesse müssen dazu unterbrochen werden, was oft zu technische Schwierigkeiten führt und wirtschaftliche Verluste bedeutet.

Der Erfindung liegt die Aufgabe zugrunde, einen Stranggranulator zu schaffen, bei dem das feststehende Gegenmesser ohne Unterbrechung des Granulierbetriebs gewechselt werden kann.

Die Aufgabe wird erfindungsgemäß dadurch gelöst, daß das Gegenmesser in einer Führung senkrecht zur Strangrichtung spielfrei geführt wird, und daß das Gegenmesser während des Granulierbetriebs mit niedriger Vorschubgeschwindigkeit in der Führung verschoben bzw. ersetzt wird. Die Vorschubgeschwindigkeit muß so klein sein, daß die Stränge in ihrer Lage im Granulator nicht beeinflußt werden. Die Fixierung des Gegenmessers nach Anspruch 2 hat den Vorteil, daß die Führung und das dazugehörige Gegenmesser bei entsprechender Konstruktion nur einen geringen Bauraum benötigen. Daraus resultiert die Möglichkeit, auch schon bestehende Granulatoren umzubauen. Dazu müßten statt der Gegenmesser die Führungen eingeschraubt werden. Voraussetzung ist, das die bestehende Konstruktion seitlich Platz zum Einschieben und Vorschieben des Gegenmessers beitet. Das Fixieren des Gegenmessers nach Anspruch 3 erlaubt es, die Reibkräfte je nach Bedarf, z.B. beim Sichern oder Verschieben des Gegenmessers, zu variieren.

Bei der Verwendung eines sehr langen Gegenmessers nach Anspruch 4 ergibt sich der Vorteil, daß im Bereich, in dem die Stränge granuliert werden, keine Stoßstellen entstehen. Ist die Verwendung eines sehr langen Messers aus Platzgründen nicht möglich, so empfiehlt sich die Lösung nach Anspruch 5. Dabei wird ein neues Messer seitlich am Granulator in die Führung eingeschoben und über eine Vorschubeinheit in den Bereich gebracht, in dem die Stränge geschnitten werden. Zugleich wird das alte, verschlissene Gegenmesser verdrängt und kann an der anderen Seite des Granulators entnommen werden. Mit einem Magazin und einer entsprechenden Einführvorrichtung nach Anspruch 6 kann dieser Vorgang automatisiert und das Vorhandensein eines funktionstüchtigen Gegenmessers über eine längere Betriebsdauer sichergestellt werden. Der kontinuierliche Vorschub des Gegenmessers nach Anspruch 7 hat den Vorteil, daß das Messer, wenn es ausgetauscht wird, über die gesamte Breite gleichmäßig verschlissen ist und sich daraus einen hohe Ausnutzung ergibt. Allerdings ist das Gegenmesser während des Eingriffs nicht gleichmäßig verschlissen. Der Verschleiß steigt mit dem zunehmendem Abstand von der Seite, von der aus das Gegenmesser eingeführt wird, da auch die Verweilzeit unter Beanspruchung entsprechend höher ist.

Beim nicht kontinuierlichen Vorschub, also beim Verschieben bzw. Austauschen des Gegenmessers in Intervallen nach Anspruch 8, werden die Stellen der Schneidkante, an denen der Strang geschnitten wird, stark beansprucht, während die Zwischenräume weitgehend unbeansprucht bleiben. Dafür sind die Stellen, an denen die Stränge geschnitten werden, aber über die gesamte Breite des Eingriffs gleich stark verschlissen. Die Ausnutzung des Gegenmessers kann dadurch erhöht werden, daß es während eines Intervalls um eine Strecke verschoben wird, die dem Abstand zweier benachbarter Stränge entspricht.

Ebenfalls eine Optimierung der Ausnutzung des Gegenmessers wird mit dem Granulator nach Anspruch 9 erreicht. Die Messung des Verschleißes kann über induktive, kapazitische oder optische Meßmethoden oder Ultraschallprüfung erfolgen. Wenn der Verschleiß konstruktiv bedingt nicht direkt in dem Bereich des Granulator gemessen werden kann, in dem die Stränge geschnitten werden, besteht die Möglichkeit außerhalb zu messen, wenn ausgetauscht oder weitergeschoben wird. Eine andere Möglichkeit besteht darin, das Gegenmesser bzw. den beanspruchten Bereich kurzzeitig mit erhöhtem Vorschub aus dem Granulierbereich herauszufahren, den Verschleiß zu messen, und es über eine geeignete Vorrichtung wieder an die Ausgangsposition zurückzuschieben.

Anhand von prinzipiellen Ausführungsbeispielen soll der Erfindungsgedanke verdeutlicht werden. Es zeigen in nicht Maßstäblicher Darstellung

Fig. 1 einen Schnitt durch einen Stranggranulator

Fig. 1a eine erfindungsgemäße Gegenmesserführung mit Reibschluß durch Federkraft

Fig. 1b eine erfindungsgemäße Gegenmesserführung mit Reibschluß durch magnetische Anziehung

Fig. 2 eine Draufsicht auf einen erfindungsgemäßen Stranggranulator.

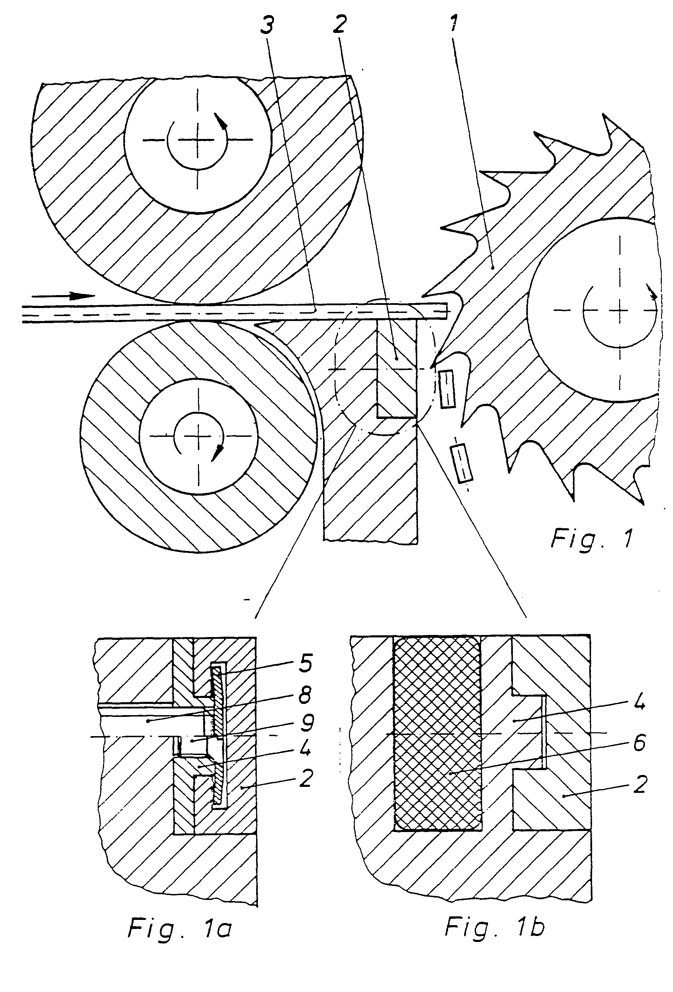

Die Fig. 1a zeigt, wie die Führung (4) mit dem Gestell des Granulators mit den Schrauben (8) verschraubt ist. Die Führung (4) selbst entspricht vom Prinzip einer T-Nut-Führung, nur daß der Querbalken des "T" aus einer Stahlbandfeder (5) besteht, die im inbelasteten Zustand nach unten gewölbt ist. Es ist über die Senkschrauben (9) mit dem Steg verbunden. Wird das entsprechend profilierte Gegenmesser (2) eingeschoben, so erzeugt die Federkraft den zur spielfreien Führung bzw. Fixierung notwendigen Reibschluß. Eine andere Möglichkeit, das Gegenmesser (2) zu Führen und zu Fixieren ist in Fig. 1b dargestellt. Die Führung wird von einem Steg (4) übernommen und die Kräfte zur Fixierung des Gegenmessers (2) über einem Elektromagneten (6) aufgebracht.

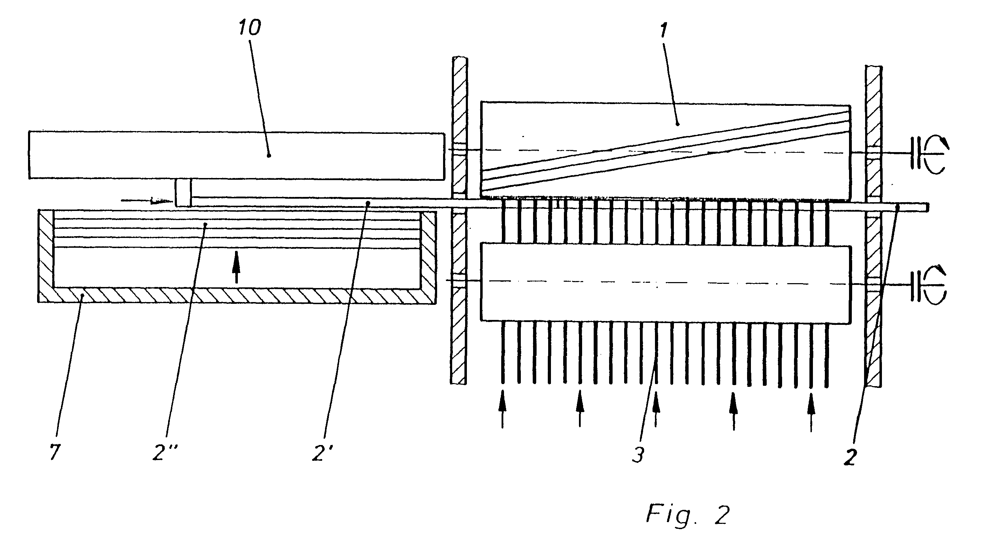

Den Ablauf des Wechsels eines Gegenmessers (2) verdeutlicht Fig. 2. Ein neues Gegenmesser (2') wird von einem Magazin (7) vorgelegt, über entsprechende Vorrichtungen in die Führung eingeschoben und dann durch eine Vorschubeinrichtung (10) in den Bereich gebracht, in dem die Stränge (3) geschnitten werden. Zugleich wird das alte, verschlissene Gegenmesser (2) verdrängt und kann an der anderen Seite des Granulators entnommen werden.

Bezeichnungen

(1)  Schneidrotor
(2)  Gegenmesser
(2')  neues, nachfolgendes Gegenmesser
(2'')  neue, bereitgehaltene Gegenmesser
(3)  Stränge
(4)  Führung (Steg)
(5)  Feder
(6)  Magnet
(7)  Magazin
(8)  Schrauben
(9)  Senkschrauben
(10)  Vorschubeinrichtung

**Patentansprüche**

1. Stranggranulator, vornehmlich zum Granulieren von Kunststoffen, bestehend aus einem Schneidrotor (1) mit mehreren Messern und einem feststehenden Gegenmesser (2), an dem die Stränge (3) geschnitten werden, dadurch gekennzeichnet, daß das Gegenmesser (2) in einer Führung (4) senkrecht zur Förderrichtung der Stränge (3) spielfrei geführt wird, und daß das Gegenmesser (2) während des Granulierbetriebs mit niedriger Vorschubgeschwindigkeit in der Führung (4) verschoben wird.

2. Stranggranulator nach Anspruch 1, dadurch gekennzeichnet, daß die Fixierung des Gegenmessers (2) in der Führung (4) durch einen Reibschluß erfolgt, der durch die Kraft einer Feder (5) erzeugt wird.

3. Stranggranulator nach Anspruch 1, dadurch gekennzeichnet, daß die Fixierung des Gegenmessers (2) in der Führung durch einen Reibschlß erfolgt, der durch die Anziehungskraft eines Magneten (6) erzeugt wird.

4. Stranggranulator nach einem der vorstehenden Ansprüche, dadurch gekennzeichnet, daß das Gegenmesser (2) wesentlich länger ist, als die Breite des Bereichs, in dem die Stränge (3) geschnitten werden.

5. Stranggranulator nach einem der vorstehenden Ansprüche, dadurch gekennzeichnet, daß das Gegenmesser (2) durch ein neues, in der Führung nachfolgendes Gegenmesser (2') während des Granulierbetriebs ersetzt wird.

6. Stranggranulator nach Anspruch 5, dadurch gekennzeichnet, daß mehrere, neue Gegenmesser (2'') in einem Magazin (7) bereitgehalten werden, und daß diese Gegenmesser (2'') bei Bedarf automatisch in die Führung (4) eingeschoben werden.

7. Stranggranulator nach einem der vorstehenden Ansprüche, dadurch gekennzeichnet, daß der Vorschub des Gegenmessers (2) bzw. der Gegenmesser (2, 2') kontinuierlich erfolgt.

8. Stranggranulator nach einem der vorstehenden Ansprüche, dadurch gekennzeichnet, daß das Gegenmesser (2) in Intervallen um die Breite des Bereichs, in dem die Stränge granuliert werden verschoben wird, bzw. daß die Gegenmesser (2) in Intervallen ausgetauscht werden.

9. Stranggranulator nach einem der vorstehenden Ansprüche, dadurch gekennzeichnet, daß der Verschleiß der Schneidkante des Gegenmessers (2) während des Granulierbetriebs erfaßt wird, und daß die ermittelten Daten zur Regelung der Vorschubgeschwindigkeit des Gegenmessers (2) bzw. zur Festlegung der Zeitintervalle, in denen die Gegenmesser (2, 2') verschoben bzw. ausgetauscht werden, herangezogen werden.

**Revendications**

1. Dispositif de production de granulés cylindriques, principalement pour la granulation de matières plastiques, constitué d'un rotor de coupe (1) à plusieurs lames et d'une contre-lame fixe (2) sur laquelle sont coupés les boudins (3), caractérisé en ce que la contre-lame (2) est guidée sans jeu dans un guide (4) perpendiculairement au sens d'avancement des boudins (3), et en ce que la contre-lame (2) est, pendant la granulation, déplacée avec une faible vitesse d'avance dans le guide (4).

2. Dispositif de production de granulés cylindriques selon la revendication 1, caractérisé en ce que la fixation en position de la contre-lame (2) dans le guide (4) s'effectue par une liaison par friction, qui est produite par la force d'un ressort (5).

3. Dispositif de production de granulés cylindriques selon la revendication 1, caractérisé en ce que la fixation en position de la contre-lame (2) dans le guide s'effectue par une liaison par friction, qui est produite par la force d'attraction d'un aimant (6).

4. Dispositif de production de granulés cylindriques selon l'une des revendications précédentes, caractérisé en ce que la contre-lame (2) est nettement plus longue que la largeur de la région dans laquelle les boudins (3) sont coupés.

5. Dispositif de production de granulés cylindriques selon l'une des revendications précédentes, caractérisé en ce que la contre-lame (2) est remplacée, pendant la granulation, par une contre-lame neuve (2') consécutive dans le guide.

6. Dispositif de production de granulés cylindriques selon la revendication 5, caractérisé en ce que plusieurs contre-lames neuves (2'') sont tenues disponibles dans un magasin (7), et en ce que ces contre-lames (2'') sont, en cas de besoin, introduites automatiquement dans le guide (4).

7. Dispositif de production de granulés cylindriques selon l'une des revendications précédentes, caractérisé en ce que l'avance de la contre-lame (2) ou, selon le cas, des contre-lames (2,2') s'effectue en continu.

8. Dispositif de production de granulés cylindriques selon l'une des revendications précédentes, caractérisé en ce que la contre-lame (2) est déplacée, par intervalles, de la largeur de la région dans laquelle les boudins sont granulés, ou, selon le cas, en ce que les contre-lames (2) sont remplacées par intervalles.

9. Dispositif de production de granulés cylindriques selon l'une des revendications précédentes, caractérisé en ce que l'usure du tranchant de la contre-lame (2) est détectée pendant la granulation, et en ce que les données établies sont utilisées pour la régulation de la vitesse d'avance de la contre-lame (2) ou, selon le cas, pour l'établissement des intervalles de temps auxquels les contre-lames (2, 2') sont déplacées ou, selon le cas, replacées.

**Claims**

1. A strand cutter, primarily for pelletizing plastics materials, consisting of a cutting rotor (1) with a plurality of knives and a stationary bed knife (2) at which the strands (3) are cut, characterised in that the bed knife (2) is guided free from play perpendicular to the conveying direction of the strands (3), in a guide (4), and that during the pelletizing operation, the bed knife (2) is displaced at a low rate of feed in the guide (4).

2. A strand cutter according to Claim 1, characterised in that the fixing of the bed knife (2) in the guide (4) is effected by a frictional locking which is produced by the force of a spring (5).

3. A strand cutter according to Claim 1, characterised in that the fixing of the bed knife (2) in the guide is effected by a frictional locking which is produced by the attractive force of a magnet (6).

4. A strand cutter according to any one of the preceding Claims, characterised in that the bed knife (2) is considerably longer than the width of the region in which the strands (3) are cut.

5. A strand cutter according to any one of the preceding Claims, characterised in that the bed knife (2) is replaced by a new bed knife (2') following in the guide, during the pelletizing operation.

6. A strand cutter according to Claim 5, characterised in that a plurality of new bed knives (2'') are held ready in a magazine (7) and that these bed knives (2'') are automatically pushed into the guide (4) when necessary.

7. A strand cutter according to any one of the preceding Claims, characterised in that the feed of the bed knife (2) or of the bed knives (2, 2') is effected continuously.

8. A strand cutter according to any one of the preceding Claims, characterised in that the bed knife (2) is displaced at intervals by the width of the region in which the strands are pelletized, or that the bed knives (2) are replaced at intervals.

9. A strand cutter according to any one of the preceding Claims, characterised in that the wear of the cutting edge of the bed knife (2) is detected during the pelletizing operation and that the data found are used to control the rate of feed of the bed knife (2) or to determine the intervals of time at which the bed knives (2, 2') are displaced or exchanged.

Fig. 1

Fig. 1a

Fig. 1b

Fig. 2

EP 0 305 460 B1